# EUROPÄISCHE PATENTSCHRIFT

(11) **EP 3 382 231 B1**
(45) Veröffentlichungstag und Bekanntmachung des Hinweises auf die Patenterteilung: **26.05.2021**
(21) Anmeldenummer: 17164157.4
(22) Anmeldetag: 31.03.2017
(51) Int. Cl.: F16G 3/00, F16G 3/02, F16G 3/16

(54) **VERFAHREN ZUM ANBRINGEN EINES VERBINDERELEMENTS AN EINEM GURTENDE EINES FÖRDERGURTS**
METHOD FOR APPLYING A CONNECTOR ELEMENT TO AN END OF A CONVEYOR BELT
PROCÉDÉ D'APPLICATION D'UN ÉLÉMENT DE CONNECTEUR SUR UNE EXTRÉMITÉ DE COURROIE DE TRANSPORT

(43) Veröffentlichungstag der Anmeldung: 03.10.2018
(73) Patentinhaber: MATO GmbH & Co. KG, 63165 Mühlheim am Main (DE)
(72) Erfinder: Herold, Wolfgang, 63075 Offenbach (DE)
(74) Vertreter: Franke, Markus

(56) Entgegenhaltungen:
- US-A1- 2003 150 698
- US-A1- 2011 100 896
- US-A1- 2016 160 435

## Beschreibung

Die Erfindung betrifft ein Verfahren zum Anbringen eines Verbinderelements an einem Gurtende eines Fördergurts.

Verbinderelemente werden an Gurtenden eines Fördergurts angebracht, um diese Verbinderelemente dann in eine überlappende Verbindung zu bringen, so dass sie mittels eines die Verbinderelemente durchsetzenden Stabs gekoppelt werden können. Hierdurch sind die Gurtenden des Fördergurts miteinander verbunden.

Verbinderelemente können hierbei unterschiedlich gestaltet sein. So sind einerseits Verbinderelemente bekannt, die unmittelbar mit dem Fördergurt durch Kleben verbunden werden. Verbinderelemente sind, U-förmig angeordnet, mit dem Fördergurt auf abgewandten Seiten des Fördergurts verbunden. Diese Verbinderelemente bestehen insbesondere aus Kunststoff.

Andere bekannte Verbinderelemente bestehen aus Metall. Diese sind beispielsweise als Drahthaken ausgebildet, die mittels eines Querdrahts miteinander verbunden sind. Diese Drahthaken werden bei U-förmig geöffneter Ausgangsstellung bezüglich des Gurtendes positioniert und dann die beiden Schenkel des jeweiligen Drahthakens aufeinander, wobei am Ende der Schenkel befindliche Hakenspitzen beim Zubiegen in den Gurt eindringen.

Ein vorbeschriebenes, nicht metallisches Verbinderelement ist in der WO2010/121360 A1 beschrieben. Ein vorgenanntes metallisches Verbinderelement sowie ein Verfahren zu dessen Anbringung am Gurt ist aus der EP 2 101 080 A2 bekannt.

Ferner ist in der US 2003/150698 A1 ein Verfahren zum Anbringen eines Verbinderelements nach dem Oberbegriff des Anspruchs 1 beschrieben wobei dieses Verbinderelement Drahthaken aufweist, wobei am Ende der Schenkel befindliche Hakenspitzen beim Zubiegen in den Gurt eindringen, wobei der jeweilige Drahthaken zwischen den Schenkeln eine Kupplungsöse aufweist. Diese Kupplungsöse dient der Aufnahme eines Kupplungsstabes. Die an den Gurtenden des Gurtes angebrachten Verbinderelemente werden dann in eine überlappende Verbindung gebracht, so dass sie mittels eines die Verbinderelemente im Bereich der Kupplungsösen durchsetzenden Stabs gekoppelt werden können.

Die US2011/100896 A1 offenbart ebenfalls ein Verbinderelement mit Drahthaken.

Aufgabe der vorliegenden Erfindung ist es, ein Verfahren zum Anbringen eines Verbinderelements an einem Gurtende eines Fördergurts anzugeben, dass bei einfacher Gestaltung des Verbinderelements ein sicheres, zeitsparendes Anbringen ermöglicht.

Gelöst wird die Aufgabe durch ein Verfahren, das die Merkmale des Patentanspruchs 1 aufweist.

Bei dem Verfahren zum Anbringen des Verbinderelements an dem Gurtende des Fördergurts ist vorgesehen, dass das Verbinderelement eine Basislage und eine auf einer Seite der Basislage angeordnete, unter Wärmeeinwirkung klebende Kleblage aufweist. Hierbei ist die Basislage in einem zentralen Bereich mit Durchgängen versehen. Zum Anbringen des Verbinderelements am Gurtende des Fördergurts wird das Verbinderelement am Gurtende angeordnet. Hierbei wird das Verbinderelement U-förmig positioniert, auf abgewandten Seiten des Gurts und auf einer Stirnseite des Gurts angeordnet. Die Durchgänge sind im Bereich der U-förmigen Umlenkung des Verbinderelements positioniert und es wird die Kleblage dem Gurt auf dessen abgewandten Seiten zugewandt angeordnet. Anschließend erfolgt das Verbinden des Verbinderelements im Bereich der abgewandten Seite des Gurts mit dem Gurt. Hierbei wird das Verbinderelement unter Einwirkung einer beidseitig des Gurts angeordneten beheizten Presseinrichtung mit dem Gurt verklebt.

Somit kann von einem plattenförmigen Verbinderelement ausgegangen werden, das ausgehend von einer ebenen Gestaltung in die U-förmige Querschnittsform gebogen wird.

Bei dem Verfahren zum Anbringen des Verbinderelements an dem Gurtende des Fördergurts ist vorgesehen, dass das Verbinderelement eine Basislage und eine auf einer Seite der Basislage angeordnete, unter Wärmeeinwirkung klebende Kleblage aufweist. Hierbei ist die Basislage in einem zentralen Bereich mit Durchgängen versehen. Zum Anbringen des Verbinderelements am Gurtende des Fördergurts wird das Verbinderelement am Gurtende angeordnet. Hierbei wird das Verbinderelement U-förmig positioniert, auf abgewandten Seiten des Gurts und auf einer Stirnseite des Gurts angeordnet. Die Durchgänge sind im Bereich der U-förmigen Umlenkung des Verbinderelements positioniert und es wird die Kleblage dem Gurt auf dessen abgewandten Seiten zugewandt angeordnet. Anschließend erfolgt das Verbinden des Verbinderelements im Bereich der abgewandten Seiten des Gurts mit dem Gurt. Hierbei wird das Verbinderelement unter Einwirkung einer beidseitig des Gurts angeordneten beheizten Presseinrichtung mit dem Gurt verklebt.

Somit kann von einem plattenförmigen Verbinderelement ausgegangen werden, das, ausgehend von einer ebenen Gestaltung, in die U-förmige Querschnittsform gebogen wird.

Unter dem vorstehend genannten Begriff "U-förmig" ist sowohl eine Anordnung der beiden Schenkel des U zu verstehen, bei der diese parallel zueinander angeordnet sind, als auch eine solche Anordnung, bei der die beiden Schenkel, ausgehend von dem die beiden Schenkel verbindenden Steg, divergierend sind, wie es in aller Regel vor dem Verbinden des Verbinderelements mit dem Gurt der Fall ist.

Das Verbinderelement wird dann positioniert, so dass das Gurtende des Fördergurts definiert zum Verbinderelement positioniert werden kann. Die Positionierung des Gurtendes erfolgt in dem zentralen Bereich der Basislage, die mit den Durchgängen versehen ist. Diese Durchgänge, die sich im Bereich der U-förmigen Umlenkung des Verbinderelements befinden, stellen denjenigen Bereich des Verbinderelements dar, in dem die überlappende Anordnung zum Verbinderelement des am anderen Gurtende des Fördergurts angebrachten Verbinderelements herbeigeführt werden kann, zwecks anschließendem Durchstecken eines Stabs durch die beiden Verbinderelemente in deren überlappenden Bereichen.

Es wird als besonders vorteilhaft angesehen, wenn nicht nur eine beheizte Presseinrichtung vorgesehen ist, um das Verbinderelement mit dem Gurt zu verkleben, sondern zusätzlich vorgesehen ist, dass die Verbindung von Verbinderelement und Gurt mittels einer beidseitig des Gurts angeordneten und gekühlten Presseinrichtung nachgepresst wird. Diese Nachpressung bei Kühlung hat den Vorteil, dass innerhalb einer kürzeren Zeitdauer eine feste Verbindung zwischen Verbinderlemente und Gurt gewährleistet ist. Wird nur mit einer beheizten Presseinrichtung gearbeitet, ist nicht auszuschließen, dass die Klebeverbindung zwischen Verbinderelement und Gurt noch nicht fest ist, sondern geringfügig teigig, so dass die Gefahr eines unerwünschten Verschiebens von Verbinderelement und Gurt besteht.

Es wird als besonders vorteilhaft angesehen, wenn der Gurt, insbesondere im Bereich des Gurtendes, bei positionierten Verbinderelement ortsfest zum Verbinderelement festgelegt wird, insbesondere bis zum Abschluss des Nachpressens derart festgelegt wird. So ist während des Anbringens des Verbinderelements am Gurtende des Fördergurts nicht nur das Verbinderelement , sondern auch der Gurt festgelegt. Hierdurch ist gewährleistet, dass sich das Verbinderelement und der Gurt nicht zueinander verschieben können, wenn die Klebeverbindung noch nicht vollständig fest ist. Dies kann dann von besonderer Bedeutung sein, wenn der Gurt und das Verbinderelement von der beheizten Presseinrichtung zur gekühlten Presseinrichtung verfahren werden muss. Es wird als vorteilhaft angesehen, wenn kein solches Verfahren von Gurt und Verbinderelement erforderlich ist, sondern das stattdessen Gurt und Verbinderelement stationär bleiben und es allenfalls erforderlich ist, die Presseinrichtung relativ zu verfahren.

Grundsätzlich kann dieselbe Presseinrichtung derart ausgeführt sein, dass sie sowohl für das Heizen als auch für das Kühlen verwendet werden kann. Es wird aber als vorteilhaft angesehen, wenn die Presseinrichtungen unabhängig voneinander sind, so dass an einem Ort die beheizte Presseinrichtung angeordnet ist und am anderen Ort die gekühlte Presseinrichtung.

Bei der Kleblage handelt es sich vorzugsweise um eine auf die Basislage aufgebrachte Schicht eines Schmelzklebstoffs. Vorzugsweise handelt es sich um einen thermoplastischen Klebstoff. Insbesondere ist die Kleblage eine aufgebrachte Polyurethanschicht.

Vorzugsweise wirkt die beheizte Presseinrichtung bei einer Temperatur von bis zu 180°C über eine Zeitdauer von 6 - 8 Sekunden auf das Verbinderelement zum Verbinden von Verbinderelement und Gurt ein.

Die gekühlte Presseinrichtung presst vorzugsweise über eine Zeitdauer von 1 - 2 Sekunden die Verbindung nach.

Bei der beheizten Presseinrichtung erfolgt somit ein aktives Beheizen, während bei der gekühlten Presseinrichtung ein aktives Kühlen erfolgt. Letzteres ist insbesondere deshalb von Bedeutung, weil die gekühlte Presseinrichtung üblicherweise unmittelbar benachbart der beheizten Presseinrichtung angeordnet ist und somit der indirekten Erwärmung über die Heizpresseinrichtung unterliegt, selbst dann, wenn Isoliermaßnahmen durchgeführt worden sind.

Vorzugsweise wirkt die beheizte Presseinrichtung im Bereich der U-förmigen Umlenkung des Verbinderelements nicht auf das Verbinderelement ein. Diese U-förmige Umlenkung wird somit nicht aktiv erwärmt, so dass ein negativer Einfluss der Erwärmung auf diese Umlenkung ausgeschlossen ist, insbesondere verhindert wird, dass der Umlenkungsbereich des Verbinderelements beim Aufheizen des Verbinderelements unnötig weich wird. Das Aufheizen mittels der beheizten Presseinrichtung dient somit dem Zweck, die Kleblage außerhalb der U-förmigen Umlenkung zu erhitzen, bei gleichzeitiger Erwärmung des Bereichs der Basislage, auf den die Kleblage aufgebracht ist, um so die Klebwirkung der Kleblage zu ermöglichen.

Vorzugsweise ist die Kleblage vollständig auf die Basislage aufgebracht. Das Verbinderelement weist somit auch im Bereich der U-förmigen Umlenkung die Kleblage auf, die zur Gesamtfestigkeit des Verbinderelements beiträgt. Wird das Verbinderelement im Bereich der U-förmigen Umlenkung nicht beheizt, erfolgt dort auch keine Aktivierung der Kleblage. Somit kann in diesem Bereich keine Klebung erfolgen, die dort auch nicht erwünscht ist, weil im Bereich der U-förmigen Umlenkungen benachbarter Verbinderelemente die überlappende Anordnung der Verbinderelemente bei Einstecken eines kuppelnden Stabs relevant ist.

Erfindungsgemäß ist vorgesehen, dass das Verbinderelement beziehungsweise die Basislage im Bereich der Durchgänge in einer Positioniereinrichtung, bei U-förmiger Anordnung des Verbinderelements, gelagert wird. Es erfolgt die Positionierung des Verbinderelements mittels einer eigens vorgesehenen Positioniereinrichtung. Diese gewährleisteten die exakte Positionierung des Verbinderelements. Dies ist von großem Vorteil, insbesondere dann, wenn auch, wie vorstehend dargelegt, der Gurt festgelegt ist. In diesem Fall ist während des Verbindens des Verbinderelements mit dem Gurt eine exakte Positionierung von Verbinderelement und Gurt gewährleistet.

Gemäß einer bevorzugten Weiterbildung ist vorgesehen, dass das Verbinderelement zwischen den Durchgängen U-förmige Vorsprünge bildet, die kammartig durch Öffnungen in der Positioniereinrichtung gesteckt werden. Senkrecht zur Steckrichtung des Verbinderelements wird ein Stab der Positioniereinrichtung eingesteckt, der die U-förmigen Vorsprünge hintergreift und das Verbinderelement entgegen der Einsteckrichtung der Vorsprünge festlegt. Durch diese Gestaltung ist eine einfache und schnelle Positionierung des Verbinderelements in der Positioniereinrichtung gewährleistet.

Als besonders vorteilhaft wird es angesehen, wenn das mit dem Gurt verbundene Verbinderelement lagefixiert von der beheizten Presseinrichtung zur gekühlten Presseinrichtung überführt wird. Bei noch nicht ausgekühlter, noch nicht fester Verbindung von Verbinderelement und Gurt ist es somit möglich, Gurt und Verbinderelement von der beheizten Presseinrichtung zur gekühlten Presseinrichtung zu überführen. Verbinderelement und Gurt halten somit ihre relativer Lage zueinander. Dies ist von besonderer Bedeutung für die Qualität der Gurtanordnung, weil nur dann, wenn eine exakte Ausrichtung des jeweiligen Verbinderelements zum Gurtende gewährleistet ist, eine präzise Kupplung der Gurtenden mittels des diese kuppelnden Stabs möglich ist und demzufolge der Kupplungsstab keine unnötigen, zusätzlichen Kräfte aufnehmen muss.

Erfindungsgemäß ist vorgesehen, dass die das Verbinderelement lagernde Positioniereinrichtung nicht ortsveränderlich ist und die beheizte Presseinrichtung geradlinig ortsveränderlich ist oder die beheizte Presseinrichtung nicht ortsveränderlich ist und die das Verbinderelement lagernde Positioniereinrichtung geradlinig ortsveränderlich ist.

Es ist insbesondere vorgesehen, dass die beheizte Presseinrichtung und die gekühlte Presseinrichtung nicht ortsveränderlich sind und die das Verbinderelement lagernde Positioniereinrichtung ortsveränderlich geradlinig ortsveränderlich ist. Die Positioniereinrichtung lässt sich somit nur geradlinig hin und her verschieben. Alternativ, im Sinne einer kinematischen Umkehrung, ist vorgesehen, dass die das Verbinderelement lagernde Positioniereinrichtung nicht ortsveränderlich ist und die beheizte Presseinrichtung und die gekühlte Presseinrichtung ortsveränderlich geradlinig ortsveränderlich sind.

Vorzugsweise ist beim Anbringen des Verbinderelements am Fördergurt das Gurtende des Fördergurts oder der Fördergurt horizontal angeordnet. Diese Anordnung ermöglicht eine besonders einfache Anbringung des Verbinderelements am Gurt und überdies eine günstige Abfuhr der Wärme der beheizten Presseinrichtung. Die Gestaltung ermöglicht es, die gekühlte Presseinrichtung horizontal neben der beheizten Presseinrichtung anzuordnen, so dass ein unerwünschter Wärmeübergang von der beheizten Presseinrichtung auf die gekühlte Presseinrichtung weitgehend vermieden wird.

Es wird als besonders vorteilhaft angesehen, wenn ein metallloses Verbindungselement am Gurtende angebracht wird. Dies ist von besonders großem Vorteil, wenn nicht nur das Verbindungselement metalllos ist, sondern auch der Gurt metalllos ist. Eine solche Gurtanordnung ist hervorragend geeignet, Gegenstände zu fördern, die mit einem RFID-Chip ausgestattet sind, so dass die geförderten Gegenstände, ohne negative Beeinflussung durch die Gurtanordnung, erfasst, insbesondere gezählt werden können. Dieses ist beispielsweise von Bedeutung in der Wäschereiindustrie.

Gemäß einer vorteilhaften Weiterbildung der Erfindung ist eine Verstärkung im Bereich der U-förmigen Umlenkung vorgesehen. Insbesondere wird ein Verbindungselement am Gurtende angebracht, das im Bereich der U-förmigen Umlenkung verstärkt ist. Vorzugsweise weist das Verbindungselement im Bereich der U-förmigen Umlenkung einen Zugträger auf. Bei diesem handelt es sich beispielsweise um einen auf die Basislage aufgeklebten Zugträger oder einen mit der Basislage verwebten Zugträger. Die Verstärkung bzw. der Zugträger besteht beispielsweise aus Kohlefaser, aus Gewebe, aus Filz oder einer Kombination solcher Materialien.

Das Verbinderelement wird insbesondere an einen Polyurethangurt, einen Baumwollgurt, einen Filzgurt, einen Filtergurt, einen Polyvinylchlorid-Gurt oder einen Gurt aus Mischformen vorgenannter Materialien angebracht. Der Gurt kann durchaus auch ein Filtergurt sein.

Weitere Merkmale der Erfindung sind in den Unteransprüchen, der Beschreibung der nachfolgenden Zeichnung der Figuren und den Figuren selbst dargestellt, wobei bemerkt wird, dass alle Merkmale und Einzelmerkmale erfindungswesentlich sind.

In den Figuren ist das erfindungsgemäße Verfahren anhand eines Ausführungsbeispiels dargestellt, ohne hierauf beschränkt zu sein. Es stellt dar:
- Fig. 1: einen stark vereinfacht dargestellten Aufbau einer Vorrichtung zur Durchführung des Verfahrens, zusätzlich veranschaulicht mit einem Gurtende eines Fördergurts und einem zum Anbringen am Gurtende vorgesehenen Verbinderelement,
- Fig. 2: die Vorrichtung gemäß Fig. 1 in einem Schnitt, senkrecht zur Längserstreckung eines Stabs im Bereich einer bei der Vorrichtung vorgesehenen gekühlten Presseinrichtung geschnitten,
- Fig. 3: die Vorrichtung gemäß Fig. 1, gezeigt für einen ersten Verfahrensschritt zum Anbringen des Verbinderelements am Gurtende des Fördergurts,
- Fig. 4: diesen Verfahrensschritt, veranschaulicht in einem Schnitt gemäß Fig. 2,
- Fig. 5: die Vorrichtung gemäß Fig. 1, gezeigt für einen zweiten Verfahrensschritt zum Anbringen des Verbinderelements am Gurtende des Fördergurts,
- Fig. 6: diesen Verfahrensschritt, veranschaulicht in einem Schnitt gemäß Fig. 2,
- Fig. 7: die Vorrichtung gemäß Fig. 1, gezeigt für einen dritten Verfahrensschritt zum Anbringen des Verbinderelements am Gurtende des Fördergurts,
- Fig. 8: diesen Verfahrensschritt, veranschaulicht in einem Schnitt gemäß Fig. 2,
- Fig. 9: die Vorrichtung gemäß Fig. 1, gezeigt für einen vierten Verfahrensschritt zum Anbringen des Verbinderelements am Gurtende des Fördergurts,
- Fig. 10: diesen Verfahrensschritt, veranschaulicht in einem Schnitt gemäß Fig. 2,
- Fig. 11: die Vorrichtung gemäß Fig. 1, gezeigt für einen fünften Verfahrenschritt zum Anbringen des Verbinderelements am Gurtende des Fördergurts,
- Fig. 12: diesen Verfahrensschritt, veranschaulicht in einem Schnitt gemäß Fig. 2,
- Fig. 13: das anzubringende Verbinderelement in einem ebenen Ausgangszustand, gezeigt in einer Seitenansicht,
- Fig. 14: dieses Verbinderelement in einer Draufsicht,
- Fig. 15: das Verbinderelement in einer Ansicht gemäß Fig. 13, allerdings veranschaulicht in einer U-förmig gebogenen Ausbildung,
- Fig. 16: dieses Verbinderelement in einer Draufsicht,
- Fig. 17: eine Draufsicht auf zwei zugewandte Gurtenden eines Fördergurts mit am jeweiligen Gurtende angebrachten Verbinderelement, bei Überlappungsstellung der Verbinderelemente und die Verbinderelemente kuppelndem Stab.

### Figurenbeschreibung

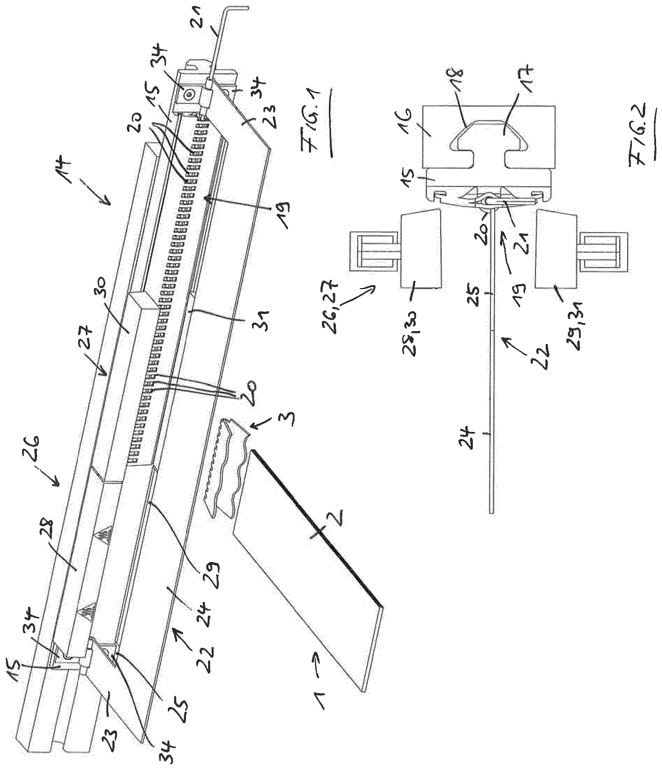

Es wird zunächst bezüglich der Beschreibung eines Fördergurts 1 und eines an einem Gurtende 2 des Fördergurts 1 anzubringenden bzw. angebrachten Verbinderelements 3 auf die Darstellung der Fig. 1 und 13 bis 17 verwiesen:

Gezeigt ist in Fig. 1 ein Fördergurt 1 im Bereich eines Gurtendes 2 und ein am Fördergurt 1 im Bereich des Gurtendes 2 anzubringendes Verbinderelement 3.

Bei dem Fördergurt 1 handelt es sich beispielsweise um einen Polyurethangurt, einen Polyvinylchloridgurt, einen Baumwollgurt, einen Filzgurt oder einen aus Mischformen vorgenannter Materialien bestehenden Gurt. Der Fördergurt 1 kann für unterschiedliche Zwecke Verwendung finden, beispielsweise als Filtergurt ausgebildet sein.

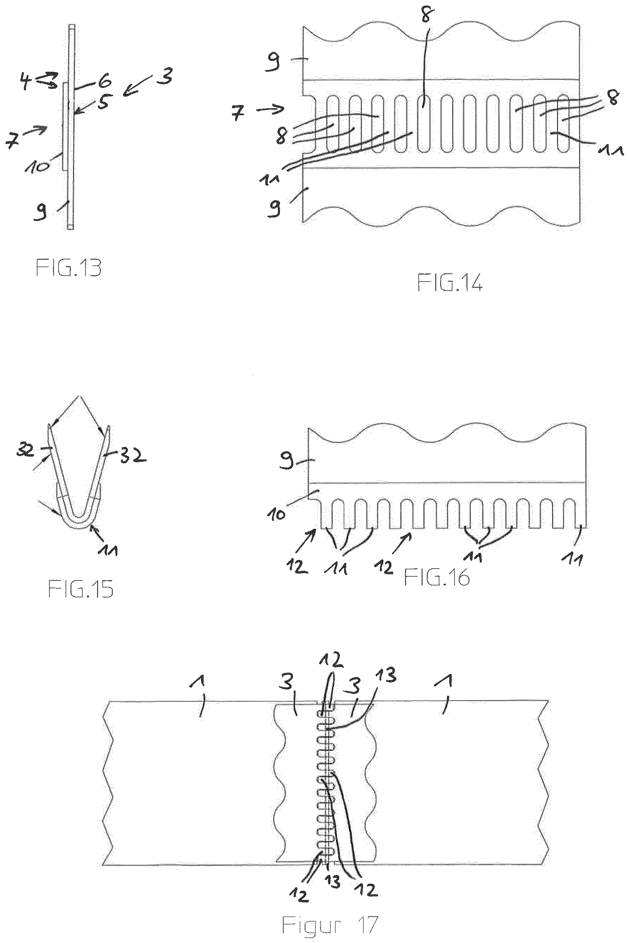

Das Verbinderelement 3 weist eine Basislage 4 und eine auf einer Seite 5 der Basislage 4 angeordnete, unter Wärmeeinwirkung klebende Kleblage 6 auf. Die Basislage 4 ist in einem zentralen Bereich 7 mit Durchgängen 8 versehen. Konkret ist, wie insbesondere der Darstellung der Fig. 13 bis 16 zu entnehmen ist, die Basislage 4 durch ein unteres Gewebe 9 und ein mit dieser verklebtes oberes Gewebe 10 gebildet, wobei das obere Gewebe 10 im zentralen Bereich 7 der Basislage 4 angeordnet ist. Sowohl das untere Gewebe 9 als auch das obere Gewebe 10 durchsetzen die Durchgänge 8. Die Durchgänge 8 sind identisch ausgebildet, als parallel zueinander angeordnete Langlöcher, sodass zwischen diesen gebildete Stege 11 der Basislage 4 beim U-förmigen Umbiegen des Verbinderelements 3, wie zu den Fig. 15 und 16 veranschaulicht, Ösen 12 bilden.

Die Kleblage 6 erstreckt sich vollständig auf der Seite 5 des Gewebes 9. In demjenigen Bereich, in dem das Verbinderelement 3 die U-förmige Umlenkung im Bereich der Ösen 12 aufweist, stellt das obere Gewebe 10 ein das Verbinderelement 3 verstärkendes Gewebe dar und wirkt somit der Schwächung des unteren Gewebes 9 aufgrund der diversen Durchgänge 8 entgegen. Das Verbinderelement 3 besteht aus metalllosen Materialien.

Fig. 17 zeigt zwei mit Gurtenden 2 eines Fördergurts 1 verbundene Verbinderelemente 3, die im Bereich deren Ösen 12 in überlappender Anordnung positioniert sind. Durch diese Ösen 12 der beiden Verbinderelemente 3 ist ein Kupplungsstab 13, gesteckt, dessen Länge der Breite des Fördergurts 1 entspricht. Der Stab 13 verbindet den Fördergurt 1 im Bereich dessen beider Gurtenden 2.

Das obere Gewebe 10, dem insbesondere eine Verstärkungsfunktion für das Verbinderelement 3 zukommt, ist insbesondere als Zugträger ausgebildet, der beim veranschaulichten Ausführungsbeispiel auf das untere Gewebe 9 aufgeklebt ist. Der Zugträger kann durchaus auch mit dem unteren Gewebe 9 verwebt sein. Beispielsweise weist der Zugträger Kohlefaserkomponenten auf.

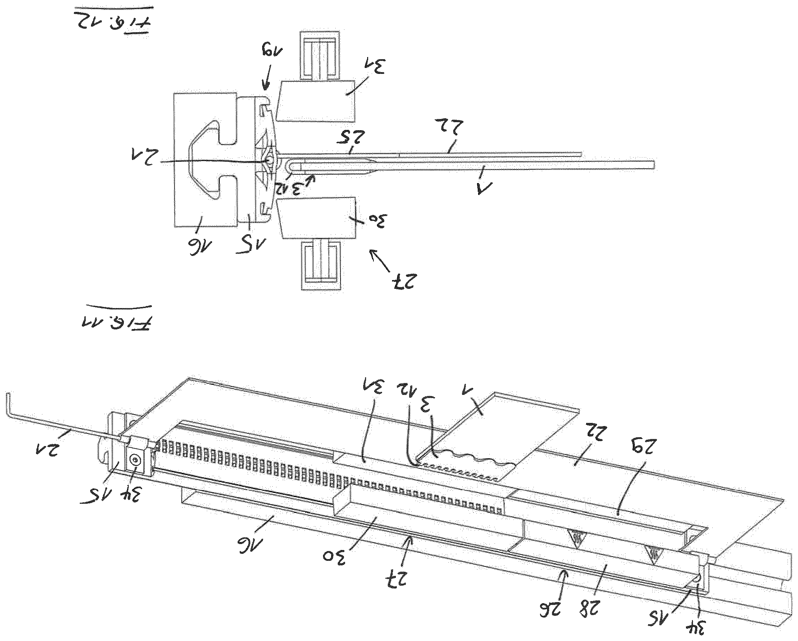

In den Fig. 1 bis 12 ist das Anbringen eines vorstehend beschriebenen Verbinderelements 3 an einem Gurtende 2 eines Fördergurts 1 beschrieben:

Veranschaulicht ist in den Figuren, wobei vorstehend insbesondere auf die Darstellung der Fig. 1 und 2 Bezug genommen wird, eine Vorrichtung 14 zum Anbringen des Verbinderelements 3 am Fördergurt 1. Diese Vorrichtung 14 weist einen stationären Träger 15 und eine in diesem verschieblich gelagerte Schiene 16 auf. Hierbei sind Träger 15 und Schiene 16 horizontal angeordnet und es ist die Schiene 16 horizontal verschiebbar. Hierzu weist der Träger 15 einen Vorsprung 17 auf, der in eine Führungsnut 18 der Schiene 16 eingreift.

Mit dem Träger 15 ist eine Positioniereinrichtung 19 fest verbunden. Diese weist horizontal nebeneinander angeordnete, sich hauptsächlich vertikal erstreckende Durchgänge 20 zum Durchstecken der Ösen 12 des Verbinderelements 3 auf. Ist das Verbinderelement 3 durch die Durchgänge 20 gesteckt, wird ein Fixierstab 21 durch die Ösen 12 gesteckt, sodass das Verbinderelement 3 lagepositioniert in der Positioniereinrichtung 19 gehalten ist.

In dem Träger 15 ist eine Lagerplatte 22 gelagert und hierbei geringfügig bezüglich einer horizontalen Ebene schwenkbar. Die Lagerplatte 22 ist in zwei seitlichen, mit dem Träger 15 verschraubten Lageraufnahmen 34 gehalten. Eine Lageraufnahmen 34 dient auch der Aufnahme des Fixierstabs 21, dessen Achse im Bereich der Positioniereinrichtung auch die Schwenkachse der Lagerplatte 22 darstellt. Die Lagerplatte 22 ist U-förmig ausgebildet, mit zwei Schenkeln 23, die endseitig mit dem Träger 15 verbunden sind, und einem die Schenkel 23 verbindenden Steg 24. Die Lagerplatte 22 umschließt somit eine Öffnung 25. Im Bereich dieser Öffnung 25 ist eine beheizbare Presseinrichtung 26 und eine kühlbare Presseinrichtung 27 angeordnet. Die beiden Presseinrichtungen 26, 27 sind jeweils, in nicht veranschaulichter Art und Weise, in der Schiene 16 gelagert und mit dieser relativ zur Positioniereinrichtung 19 verfahrbar. Die heizbare Presseinrichtung 26 weist einen oberhalb der Lagerplatte 22 angeordneten Presskörper 28 und einen unterhalb der Lagerplatte 22 angeordneten Presskörper 29 auf. Entsprechend weist die kühlbare Presseinrichtung 27 einen oberhalb der Lagerplatte 22 angeordneten Presskörper 30 und einen unterhalb der Lagerplatte 22 angeordneten Presskörper 31 auf. Die Presskörper 28 und 29 bzw. 30 und 31 sind jeweils vertikal verfahrbar, das heißt die oberen Presskörper 28 bzw. 30 absenkbar und die unteren Presskörper 29 bzw. 31 anhebbar, um so in der vertikal aufeinanderzubewegten Pressstellung im Bereich der Durchgänge 22 der Positioniereinrichtung 19 die Pressung, entweder aufgeheizt mittels der beheizten Presseinrichtung 26 oder gekühlt mittels der gekühlten Presseinrichtung 27 durchzuführen.

Die Figuren 1 und 2 zeigen einen ersten Ausgangsverfahrensschritt zum Anbringen des Verbinderelements 3 am Gurtende 2 des Fördergurts 1. Gezeigt ist die Vorrichtung 14 mit in die linke Endstellung verschobener Schiene 16, womit sich die gekühlte Presseinrichtung 27 etwa in der Mitte der Öffnung 25 der Lagerplatte 22 und die beheizte Presseinrichtung 26 im linken Bereich der Öffnung 25 befindet. Die Presskörper der Presseinrichtung sind auseinandergefahren, befinden sich somit maximal oberhalb bzw. maximal unterhalb der Lagerplatte 22. Veranschaulicht ist in Fig. 1 auch das Gurtende des Fördergurts 1 und das Verbinderelement 3, das mit dem Fördergurt 1 zu verbinden ist.

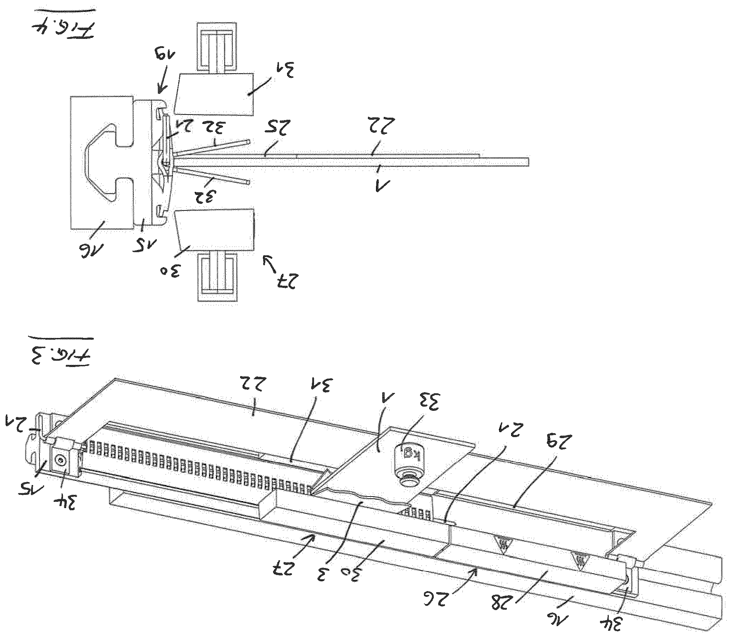

Die Fig. 3 und 4 zeigen den folgenden Verfahrensschritt, bei dem das U-förmig gebogene Verbinderelement 3 im Bereich seiner Ösen 12 durch die Durchgänge 20 der Positioniereinrichtung 19 gesteckt ist und mittels des in der Lagerplatte 22 axial verschieblich gelagerten Fixierstabs 21 gehalten ist, der die Ösen 12 durchsetzt. Zwischen die beiden sich an die Öse 12 anschließenden Schenkel 32 ist der Fördergurt 1 im Bereich seines Gurtendes 2 eingeschoben, so weit, bis das Gurtende 2 an die Positioniereinrichtung 19 im Bereich der Durchgänge 20 anstößt. In dieser bezüglich des Verbinderelements 3 exakt ausgerichteten Stellung wird der Fördergurt 1 im Bereich seines Gurtendes 2 über eine nicht im Detail veranschaulichte Presseinrichtung gehalten, die auf den Fördergurt 1 einwirkt und diesen gegen die Lagerplatte 2 drückt. Diese Presseinrichtung ist vereinfacht durch ein Gewicht 33 dargestellt.

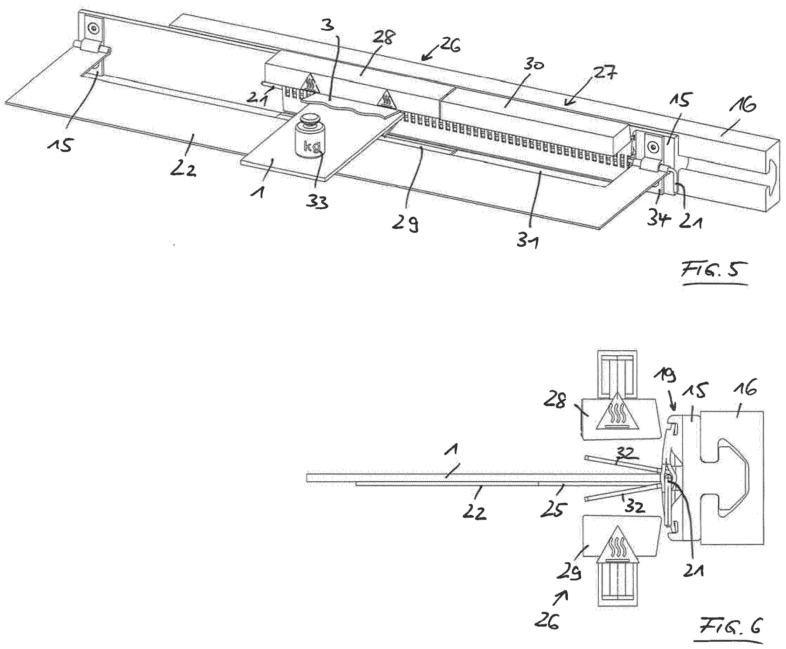

Anschließend wird, wie zu den Fig. 5 und 6 veranschaulicht, die Schiene 16 zusammen mit den beiden Presseinrichtungen 26, 27 horizontal, nach rechts verfahren, sodass nunmehr die gekühlte Presseinrichtung 7 im rechten Bereich der Öffnung 25 angeordnet ist und die beheizte Presseinrichtung 26 im mittleren Bereich der Öffnung 25 angeordnet ist, somit das Verbinderelement 3 zwischen den beiden Presskörpern 28, 29 der beheizten Presseinrichtung 26 positioniert ist.

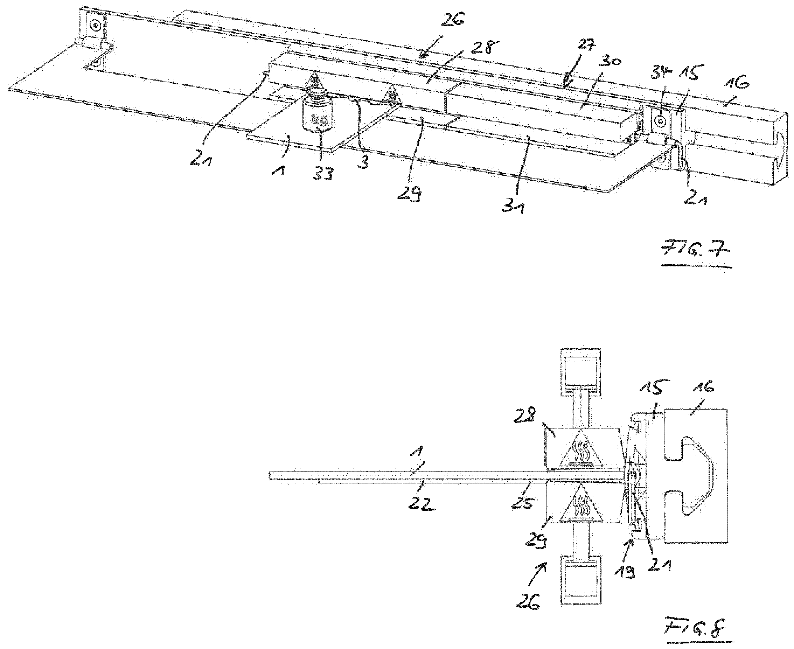

Wie zu den Fig. 7 und 8 veranschaulicht, werden dann die heißen Presskörper 28, 29 der Presseinrichtung 26 aufeinanderzubewegt, womit sie auf das Verbinderelement 3 und den Fördergurt 1 einwirken. Die Schenkel 32 des Verbinderelements 3 werden an den Fördergurt 1 angelegt und unter Einwirkung der Presseinrichtung 26 das Verbinderelement 3 im Bereich der aus thermoplastischem Klebstoff gebildeten Kleblage 6 mit dem Fördergurt 1 verklebt. Insbesondere wirkt die beheizte Presseinrichtung 26 bei einer Temperatur von bis zu 180 °C über eine Zeitdauer von 6 bis 8 Sekunden auf das Verbinderelement 3 zu dessen Verbinden mit dem Fördergurt 1 ein. Dann werden die Presskörper 28, 29 wieder auseinanderbewegt.

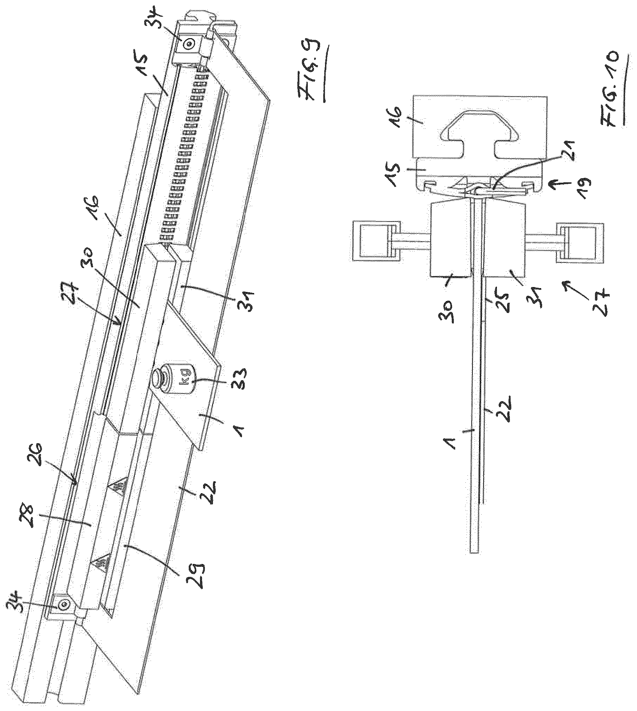

Wie zu den Fig. 9 und 10 veranschaulicht, wird anschließend die Schiene 16 verfahren und es werden damit die beiden Presseinrichtungen 26, 27 verfahren, in eine Stellung gemäß der Ausgangsstellung nach den Fig. 3 und 4, und dann die gekühlten Presskörper 30, 31 der Presseinrichtung 27 aufeinanderbewegt. Es erfolgt ein Nachpressen der Verbindung von Verbinderelement 3 und Fördergurt 1 mittels der gekühlten Presseinrichtung 27. Insbesondere wird über eine Zeitdauer von 1 bis 2 Sekunden nachgepresst.

Anschließend werden die Presskörper 30, 31 wieder auseinanderbewegt und es wird der Fixierstab 21 aus der Positioniereinrichtung 19 herausgezogen, sodass das Verbinderelement 3 zusammen mit dem Fördergurt 1 aus der Positioniereinrichtung 17 entnommen werden kann.

Ein Anbringen eines weiteren Verbinderelements an einem Fördergurt erfolgt im aufgezeigten Sinne.

## Patentansprüche

1. Verfahren zum Anbringen eines Verbinderelements (3) an einem Gurtende (2) eines Fördergurts (1), wobei das Verbinderelement (3) eine Basislage (4) und eine auf einer Seite (5) der Basislage (4) angeordnete, unter Wärmeeinwirkung klebende Kleblage (6) aufweist, sowie die Basislage (4) in einem zentralen Bereich (7) mit Durchgängen (8) versehen ist, mit folgenden Merkmalen:
- Anordnen des Verbinderelements (3) am Gurtende (2), wobei das Verbinderelement (3), U-förmig positioniert, auf abgewandten Seiten des Gurts (1) und auf einer Stirnseite des Gurts (1) angeordnet wird, wobei die Durchgänge (8) im Bereich der U-förmigen Umlenkung des Verbinderelements (3) positioniert sind und die Kleblage (6) dem Gurt (1) auf dessen abgewandten Seiten zugewandt angeordnet wird,
- Verbinden des Verbinderelements (3) im Bereich der abgewandten Seiten des Gurts (1) mit dem Gurt (1), wobei das Verbinderelement (3) unter Einwirkung einer beidseitig des Gurts (1) angeordneten beheizten Presseinrichtung (26) mit dem Gurt (1) verklebt wird, wobei das Verbinderelement (3) im Bereich der Durchgänge (8) in einer Positioniereinrichtung (19), bei U-förmiger Anordnung des Verbinderelements (3), gelagert wird, **dadurch gekennzeichnet, dass** die das Verbinderelement (3)
lagernde Positioniereinrichtung (19) nicht ortsveränderlich ist und die beheizte Presseinrichtung (26) geradlinig ortsveränderlich ist oder die beheizte Presseinrichtung (26) nicht ortsveränderlich ist und die das Verbinderelement (3) lagernde Positioniereinrichtung (19) geradlinig ortsveränderlich ist.

2. Verfahren nach Anspruch 1, wobei die Verbindung von Verbinderelement (3) und Gurt (1) mittels einer beidseitig des Gurts (1) angeordneten gekühlten Presseinrichtung (27) nachgepresst wird.

3. Verfahren nach Anspruch 2, wobei der Gurt (1), insbesondere im Bereich des Gurtendes (2), bei positioniertem Verbinderelement (3) ortsfest zum Verbinderelement (3) festgelegt wird, insbesondere bis zum Abschluss des Nachpressens derart festgelegt wird.

4. Verfahren nach einem der Ansprüche 1 bis 3, wobei die Kleblage (6) eine auf die Basislage (4) aufgebrachte Schicht eines Schmelzklebstoffs, vorzugsweise eines thermoplastischen Klebstoffs, insbesondere eine aufgebrachte Polyurethanschicht ist.

5. Verfahren nach einem der Ansprüche 1 bis 4, wobei die beheizte Presseinrichtung (26), bei einer Temperatur von bis zu 180 °C über eine Zeitdauer von 6 bis 8 Sekunden, auf das Verbinderelement (3) zum Verbinden von Verbinderelement (3) und Gurt (1) einwirkt und/oder wobei die gekühlte Presseinrichtung (27), über eine Zeitdauer von 1 bis 2 Sekunden, die Verbindung nachpresst.

6. Verfahren nach einem der Ansprüche 1 bis 5, wobei die beheizte Presseinrichtung (26) im Bereich der U-förmigen Umlenkung des Verbinderelements (3) nicht auf das Verbinderelement (3) einwirkt.

7. Verfahren nach einem der Ansprüche 1 bis 6, wobei das Verbinderelement (3) auch im Bereich der U-förmigen Umlenkung die Kleblage (6) aufweist.

8. Verfahren nach einem der Ansprüche 1 bis 7, wobei das Verbinderelement (3) zwischen den Durchgängen (8) U-förmige Vorsprünge (12) bildet, die kammartig durch Öffnungen (20) in der Positioniereinrichtung (19) gesteckt werden sowie senkrecht zur Steckrichtung des Verbinderelements (3) ein Stab (21) der Positioniereinrichtung (19) eingesteckt wird, der die U-förmigen Vorsprünge (12) hintergreift und das Verbinderelement (3) entgegen der Einsteckrichtung der Vorsprünge (12) festlegt.

9. Verfahren nach einem der Ansprüche 2 bis 8, wobei das mit dem Gurt (1) verbundene Verbinderelement (3) lagefixiert von der beheizten Presseinrichtung (26) zur gekühlten Presseinrichtung (27) überführt wird.

10. Verfahren nach einem der Ansprüche 2 bis 9, wobei die das Verbinderelement (3) lagernde Positioniereinrichtung (19) nicht ortsveränderlich ist und die gekühlte Presseinrichtung (27) geradlinig ortsveränderlich ist, oder die gekühlte Presseinrichtung (27) nicht ortsveränderlich ist und die das Verbinderelement (3) lagernde Positioniereinrichtung (19) geradlinig ortsveränderlich ist.

11. Verfahren nach einem der Ansprüche 1 bis 10, wobei beim Anbringen des Verbinderelements (3) am Fördergurt (1) das Gurtende (2) des Fördergurts (1) oder der Fördergurt (1) horizontal angeordnet ist.

12. Verfahren nach einem der Ansprüche 1 bis 11, wobei ein metallloses Verbindungselement (3) am Gurtende (2) angebracht wird.

13. Verfahren nach einem der Ansprüche 1 bis 12, wobei ein Verbindungselement (3) am Gurtende (2) angebracht wird, das im Bereich der U-förmigen Umlenkung verstärkt ist, vorzugsweise einen Zugträger, insbesondere einen auf die Basislage (4) aufgeklebten oder mit der Basislage (4) verwebten Zugträger aufweist.

14. Verfahren nach einem der Ansprüche 1 bis 13, wobei das Verbinderelement (3) an einen Polyurethangurt, einen Polyvinylchloridgurt, einen Baumwollgurt, einen Filzgurt oder einen aus Mischformen vorgenannter Materialien bestehenden Gurt oder an einen Filtergurt angebracht wird.

## Claims

1. Method for attaching a connector element (3) to a belt end (2) of a conveyor belt (1), wherein the connector element (3) has a base tier (4) and an adhesive tier (6) which is disposed on one side (5) of the base tier (4) and is adhesive under the effect of heat, the base tier (4) in a central region (7) being provided with passages (8), comprising the following features:
- disposing the connector element (3) on the belt end (2), wherein the connector element (3), positioned in a U-shaped manner, is disposed on averted sides of the belt (1) and on one end side of the belt (1), wherein the passages (8) are positioned in the region of the U-shaped deflection of the connector element (3), and the adhesive tier (6) is disposed on the belt (1) so as to face the averted sides of said belt (1),
- connecting the connector element (3) to the belt (1) in the region of the averted sides of the belt (1), wherein the connector element (3) is adhesively bonded to the belt (1) under the effect of a heated pressing installation (26) that is disposed on both sides of the belt (1), wherein the connector element (3) in the region of the passages (8), in the case of a U-shaped disposal of the connector element (3), is mounted in a positioning installation (19), **characterized in that**
the positioning installation (19) that mounts the connector element (3) is not locationally variable, and the heated pressing installation (26) is locationally variable in a linear manner, or the heated pressing installation (26) is not locationally variable, and the positioning installation (19) that mounts the connector element (3) is locationally variable in a linear manner.

2. Method according to Claim 1, wherein the connection of the connector element (3) to the belt (1) is post-pressed by means of a cooled pressing installation (27) that is disposed on both sides of the belt (1).

3. Method according to Claim 2, wherein the belt (1), in particular in the region of the belt end (2), in the case of a positioned connector element (3) is secured so as to be locationally fixed in relation to the connector element (3), in particular is secured in such a manner until the post-pressing is completed.

4. Method according to one of Claims 1 to 3, wherein the adhesive tier (6) is a layer of a heat-melt adhesive, preferably of a thermoplastic adhesive, that is applied to the base tier (4), in particular is an applied polyurethane layer.

5. Method according to one of Claims 1 to 4, wherein the heated pressing installation (26) for connecting the connector element (3) to the belt (1) acts on the connector element (3) at a temperature of up to 180°C and over a time period of 6 to 8 seconds, and/or wherein the cooled pressing installation (27) post-presses the connection over a time period of 1 to 2 seconds.

6. Method according to one of Claims 1 to 5, wherein the heated pressing installation (26) does not act on the connector element (3) in the region of the U-shaped deflection of the connector element (3).

7. Method according to one of Claims 1 to 6, wherein the connector element (3) has the adhesive tier (6) also in the region of the U-shaped deflection.

8. Method according to one of Claims 1 to 7, wherein the connector element (3) between the passages (8) forms U-shaped protrusions (12) which in the manner of a comb are plug-fitted through openings (20) in the positioning installation (19), and a rod (21) of the positioning installation (19) is plug-fitted perpendicularly to the plug-fitting direction of the connector element (3), said rod (21) engaging behind the U-shaped protrusions (12) and securing the connector element (3) counter to the plug-fitting direction of the protrusions (12).

9. Method according to one of Claims 2 to 8, wherein the connector element (3) that is connected to the belt (1) is transferred in a positionally fixed manner from the heated pressing installation (26) to the cooled pressing installation (27).

10. Method according to one of Claims 2 to 9, wherein the positioning installation (19) that mounts the connector element (3) is not locationally variable, and the cooled pressing installation (27) is locationally variable in a linear manner, or the cooled pressing installation (27) is not locationally variable, and the positioning installation (19) that mounts the connector element (3) is locationally variable in a linear manner.

11. Method according to one of Claims 1 to 10, wherein the belt end (2) of the conveyor belt (1), or the conveyor belt (1), is horizontally disposed when the connector element (3) is being attached to the conveyor belt (1).

12. Method according to one of Claims 1 to 11, wherein a metal-free connecting element (3) is attached to the belt end (2).

13. Method according to one of Claims 1 to 12, wherein a connecting element (3) which is reinforced in the region of the U-shaped deflection is attached to the belt end (2), said connecting element (3) preferably having a tension member, in particular a tension member that is adhesively bonded to the base tier (4) or is interwoven with the base tier (4).

14. Method according to one of Claims 1 to 13, wherein the connector element (3) is attached to a polyurethane belt, to a polyvinyl chloride belt, to a cotton belt, to a felt belt, or to a belt that is composed of mixtures of the aforementioned materials, or to a filter belt.

## Revendications

1. Procédé de disposition d'un élément connecteur (3) au niveau d'une extrémité de courroie (2) d'une courroie de transport (1), l'élément connecteur (3) comprenant une couche de base (4) et une couche de colle (6), agencée sur un côté (5) de la couche de base (4), collant sous l'action de chaleur, et la couche de base (4) étant munie de passages (8) dans une zone centrale (7), présentant les caractéristiques suivantes :
- l'agencement de l'élément connecteur (3) au niveau de l'extrémité de courroie (2), l'élément connecteur (3) étant agencé, positionné en forme de U, sur des côtés détournés de la courroie (1) et sur un côté frontal de la courroie (1), les passages (8) étant positionnés dans la zone de la déviation en forme de U de l'élément connecteur (3) et la couche de colle (6) étant agencée tournée vers la courroie (1) sur ses côtés détournés,
- la connexion de l'élément connecteur (3) dans la zone des côtés détournés de la courroie (1) avec la courroie (1), l'élément connecteur (3) étant collé avec la courroie (1) sous l'action d'un dispositif de compression chauffé (26) agencé des deux côtés de la courroie (1), l'élément connecteur (3) étant logé dans la zone des passages (8) dans un dispositif de positionnement (19) lorsque l'élément connecteur (3) est agencé en forme de U, **caractérisé en ce que** le dispositif de positionnement (19) logeant l'élément connecteur (3) n'est pas mobile et le dispositif de compression chauffé (26) est mobile en ligne droite ou le dispositif de compression chauffé (26) n'est pas mobile et le dispositif de positionnement (19) logeant l'élément connecteur (3) est mobile en ligne droite.

2. Procédé selon la revendication 1, dans lequel la connexion de l'élément connecteur (3) et de la courroie (1) est recomprimée au moyen d'un dispositif de compression refroidi (27) agencé des deux côtés de la courroie (1).

3. Procédé selon la revendication 2, dans lequel la courroie (1), notamment dans la zone de l'extrémité de courroie (2), est fixée de manière stationnaire par rapport à l'élément connecteur (3) lorsque l'élément connecteur (3) est positionné, notamment est ainsi fixée jusqu'à l'achèvement de la recompression.

4. Procédé selon l'une quelconque des revendications 1 à 3, dans lequel la couche de colle (6) est une couche d'une colle fusible appliquée sur la couche de base (4), de préférence d'une colle thermoplastique, notamment une couche de polyuréthane appliquée.

5. Procédé selon l'une quelconque des revendications 1 à 4, dans lequel le dispositif de compression chauffé (26) agit, à une température de jusqu'à 180 °C pendant une durée de 6 à 8 secondes, sur l'élément connecteur (3) pour la connexion de l'élément connecteur (3) et de la courroie (1), et/ou dans lequel le dispositif de compression refroidi (27) recomprime la connexion pendant une durée de 1 à 2 secondes.

6. Procédé selon l'une quelconque des revendications 1 à 5, dans lequel le dispositif de compression chauffé (26) n'agit pas sur l'élément connecteur (3) dans la zone de la déviation en forme de U de l'élément connecteur (3).

7. Procédé selon l'une quelconque des revendications 1 à 6, dans lequel l'élément connecteur (3) comprend la couche de colle (6) également dans la zone de la déviation en forme de U.

8. Procédé selon l'une quelconque des revendications 1 à 7, dans lequel l'élément connecteur (3) forme entre les passages (8) des protubérances en forme de U (12), qui sont insérées à la manière d'un peigne au travers d'ouvertures (20) dans le dispositif de positionnement (19), et une barre (21) est insérée dans le dispositif de positionnement (19) perpendiculairement à la direction d'insertion de l'élément connecteur (3), qui vient en prise par derrière avec les protubérances en forme de U (12) et fixe l'élément connecteur (3) à l'encontre de la direction d'insertion des protubérances (12).

9. Procédé selon l'une quelconque des revendications 2 à 8, dans lequel l'élément connecteur (3) connecté avec la courroie (1) est transféré en position fixe du dispositif de compression chauffé (26) au dispositif de compression refroidi (27).

10. Procédé selon l'une quelconque des revendications 2 à 9, dans lequel le dispositif de positionnement (19) logeant l'élément connecteur (3) n'est pas mobile et le dispositif de compression refroidi (27) est mobile en ligne droite, ou le dispositif de compression refroidi (27) n'est pas mobile et le dispositif de positionnement (19) logeant l'élément connecteur (3) est mobile en ligne droite.

11. Procédé selon l'une quelconque des revendications 1 à 10, dans lequel, lors de la disposition de l'élément connecteur (3) au niveau de la courroie de transport (1), l'extrémité de courroie (2) de la courroie de transport (1) ou la courroie de transport (1) est agencée horizontalement.

12. Procédé selon l'une quelconque des revendications 1 à 11, dans lequel un élément connecteur sans métal (3) est disposé au niveau de l'extrémité de courroie (2) .

13. Procédé selon l'une quelconque des revendications 1 à 12, dans lequel un élément connecteur (3) est disposé au niveau de l'extrémité de courroie (2), qui est renforcé dans la zone de la déviation en forme de U, de préférence comprend un renfort de traction, notamment un renfort de traction collé sur la couche de base (4) ou tissé avec la couche de base (4).

14. Procédé selon l'une quelconque des revendications 1 à 13, dans lequel l'élément connecteur (3) est disposé sur une courroie en polyuréthane, une courroie en polychlorure de vinyle, une courroie en coton, une courroie en feutre ou une courroie constituée de formes mixtes des matériaux susmentionnés ou sur une courroie filtrante.
